# EUROPÄISCHE PATENTSCHRIFT

(11) **EP 1 282 835 B1**
(45) Veröffentlichungstag und Bekanntmachung des Hinweises auf die Patenterteilung: **26.07.2006**
(21) Anmeldenummer: 01943025.5
(22) Anmeldetag: 07.05.2001
(51) Int. Cl.: G02B 6/27, G02B 6/34, G02B 6/28

(54) **EMULATOR FÜR PMD ZWEITER ORDNUNG**
EMULATOR FOR SECOND ORDER POLARIZATION MODE DISPERSION (PMD)
EMULATEUR POUR DISPERSION A POLARISATION DE MODE DE 2?EME ORDRE

(30) Priorität: 06.05.2000 DE 10021835; 06.05.2000 DE 10021836; 12.07.2000 DE 10033820
(43) Veröffentlichungstag der Anmeldung: 12.02.2003
(73) Patentinhaber: THORLABS GmbH, 85757 Karlsfeld (DE)
(72) Erfinder: BANDEMER, Adalbert, 85221 Dachau (DE); KRAUSE, Egbert, 09217 Burgstädt (DE)
(74) Vertreter: Schurack, Eduard F.
(86) Internationale Anmeldenummer: PCT/DE2001/001716
(87) Internationale Veröffentlichungsnummer: WO 2001/086333

(56) Entgegenhaltungen:
- EP-A- 0 376 449
- EP-A- 0 707 226
- EP-A- 0 964 237
- WO-A-99/49340
- US-A- 5 430 454
- KUDOU T ET AL: "THEORETICAL BASIS OF POLARIZATION MODE DISPERSION EQUALIZATION UP TO THE SECOND ORDER" JOURNAL OF LIGHTWAVE TECHNOLOGY, IEEE. NEW YORK, US, Bd. 18, Nr. 4, April 2000 (2000-04), Seiten 614-617, XP000989286 ISSN: 0733-8724

## Beschreibung

### Technisches Gebiet

Die Erfindung bezieht sich auf eine Anordnung zur Erzeugung einer vorgebbaren Polarisations-Moden-Dispersion (PMD) gemäß dem Oberbegriff des Patentanspruchs 1.

Derartige Anordnungen werden beispielsweise zur Erzeugung einer bestimmten PMD für Meß- oder Prüfsysteme oder zur Kompensation PMD-bedingter Verzerrungen in optischen Transmissionssystemen und insbesondere Transmissionsfasern benötigt.

Da jede Glasfaser ungewollt in geringem Umfange doppelbrechend ist, laufen Lichtsignale unterschiedlicher Polarisation mit verschiedenen Gruppengeschwindigkeiten durch die Glasfaser. Beim Empfänger kommen die Lichtanteile unterschiedlicher Polarisation daher zeitlich gegeneinander verzögert an; dieser Laufzeiteffekt führt zu einer Verbreiterung des empfangenen Signals und damit zu einer Beeinträchtigung der Übertragungsqualität. Dies kann insbesondere zu einer Erhöhung der Bitfehlerrate führen.

Die Polarisations-Moden-Dispersion umfaßt alle polarisationsabhängigen Laufzeiteffekte, bei denen sich die Signalausbreitung vollständig durch das Ausbreitungsverhalten zweier voneinander unabhängiger und zueinander orthogonaler Polarisationsmoden beschreiben läßt. Da sich die Doppelbrechung durch äußere Einflüsse, wie Temperatur und mechanische Belastung ständig ändert, und zudem von der Wellenlänge abhängt, verändert sich permanent sowohl die Lage der "principial states of polarisation" (PSP) als auch die Laufzeitdifferenz zwischen den PSP's. Dies bezeichnet man auch als Polarisations-Moden-Dispersion zweiter Ordnung.

Aus den genannten Effekten resultiert ein zeitlich flukturierendes wellenlängenabhängiges PMD-Verhalten mit Zeitkonstanten im Minutenbereich.

### Stand der Technik

Eine bekannte Anordnung, von der bei der Formulierung des Oberbegriffs des Patentanspruchs 1 ausgegangen wird, weist ein erstes Polarisationssplitter/combiner-Element, das das ankommende Signal in zwei Signale mit zueinander senkrechter Polarisationsrichtung aufspaltet, eine Verzögerungseinheit, die in einer der Signalstrecken der beiden (aufgespaltenen) Signale angeordnet ist, und ein zweites Polarisationssplitter/combiner-Element auf, das die beiden getrennten Signale wieder zusammenführt.

Diese bekannte Anordnung hat den Nachteil, daß sie lediglich die Kompensation PMD-bedingter Verzerrungen erster Ordnung erlaubt. Gerade bei langen Übertragungsstrecken spielen jedoch PMD-bedingter Verzerrungen 2. Ordnung eine erhebliche Rolle.

Das US-Patent 5,430,454 offenbart eine Anordnung zur Erzeugung einer einstellbaren Laufzeitverzögerung für ein optisches Signal, die polarisationsunabhängig ist. Parallel zu einem Hauptpfad sind hierbei sekundäre optische Pfade vorgesehen, in denen eine Verzögerung der Signale stattfindet.

Aus der EP 0 376 449 A1 ist ein Interferometer bekannt, das zwei Interferometerausgänge hat, wobei Signale jeweils aus einem Ausgang über eine Schleife in den anderen Ausgang wieder zurückgekoppelt werden.

Aus der EP 0 707 226 A1 ist ein Gerät und ein Verfahren zum Spleißen von optischen Fasern bekannt.

Eine weitere bekannte Anordnung zur PMD-Emulation ist beispielsweise eine Anordnung von PM-Fasern mit unterschiedlichen oder gleichen Gruppenlaufzeiten, denen jeweils eine Polarisationstransformationseinheit vorgeschaltet ist.

### Darstellung der Erfindung

Der Erfindung liegt die Aufgabe zugrunde, eine Anordnung zur Erzeugung einer vorgebbaren Polarisations-Moden-Dispersion anzugeben, die auch die Erzeugung einer Polarisations-Moden-Dispersion zweiter Ordnung erlaubt, und die die PMD einer realen Transmissionsfaser möglichst exakt nachbildet.

Eine erfindungsgemäße Lösung dieser Aufgabe ist im Patentanspruch 1 angegeben. Weiterbildungen der Erfindung sind Gegenstand der Ansprüche 2 folgende.

Erfindungsgemäß wird zur Erzeugung einer Polarisations-Moden-Dispersion, die der PMD zweiter Ordnung einer realen Faser entspricht, von einer Anordnung gemäß dem Oberbegriff ausgegangen; diese gattungsgemäße Anordnung wird dadurch weitergebildet, daß ein Element vorgesehen ist, das die Polarisations-Hauptachsen vor und hinter dem Element um einen geeigneten Winkel zueinander verdreht. Das aus diesem Element austretende Lichtsignal wird erfindungsgemäß in eine Anordnung eingespeist, die ebenfalls aus einem Polarisationssplitter/combiner-Element, einer Verzögerungsstrecke und einem weiteren Polarisationssplitter/combiner-Element zum Zusammenführen der beiden Signalstrecken besteht. Mit dieser Anordnung ist zusätzlich zur Erzeugung einer Polarisations-Moden-Dispersion erster Ordnung auch die Erzeugung einer Dispersion zweiter Ordnung möglich. Von besonderem Vorteil ist es, daß es - ausgehend von einer Anordnung gemäß dem Oberbegriff des Patentanspruchs 1 - nicht einmal erforderlich ist, zusätzliche Bauelemente, die die Kosten erhöhen würden, zu verwenden. Vielmehr ist es möglich, die erfindungsgemäße Erzeugung einer Polarisations-Moden-Dispersion zweiter Ordnung dadurch zu erhalten, daß der nicht benutzte Eingangsanschluß des zweiten Polarisationssplitter/combiner-Elements als Eingangsanschluß für das Signal dient. Dieses Signal durchläuft dann die Verzögerungsstrecke und den ersten Polarisationsstrahlteiler in Gegenrichtung zum ankommenden Signal. Am vierten Tor des ersten Polarisationssplitter/combiner-Elements wird dieses Signal dann ausgekoppelt. Das ausgekoppelte Signal weist dann die gewünschte Polarisations-Moden-Dispersion erster und zweiter Ordnung auf.

Ein besonderer Vorteil dieser Anordnung ist, daß zur einstellung der PMD 2.ter Ordnung lediglich ein einziger Stellwert, nämlich die Länge der Verzögerungsleitung vorgegeben werden muß.

Weiter ist es bevorzugt, wenn der Winkel, um den das Element die Polarisations-Hauptachsen gegeneinander verdreht, einstellbar ist. Hierdurch ist es möglich, die Steilheit der Principial State of Polarisation (PSP) sowie das Verhältnis der Polarisations-Moden-Dispersion (PMD) 1. und 2. Ordnung einzustellen. Als besonders geeignet hat es sich herausgestellt, einen Winkel von ca. 22,5° zu wählen. Bei einem derartigen Winkel ist das statistische Verhältnis zwischen PMD 1. und PMD 2. Ordnung dem einer realen Transmissionsfaser in optischen Netzwerken praktisch vollständig angepaßt.

Als Verzögerungsstrecken können die verschiedensten bekannten Lösungen eingesetzt werden. Beispielsweise ist es möglich, daß die Verzögerungsstrecke optisch oder elektrisch realisiert wird. Bei einer optischen Realisierung wird der Strahl in der Verzögerungsstrecke als Freistrahl geführt. Zur Einstellung der Verzögerung wird die Weglänge geändert, über die der Strahl als Freistrahl geführt wird.

Bei einer weiteren Realisierung der Verzögerungsstrecke werden die Fasern mechanischen Kräften ausgesetzt, so daß sich die optischen Parameter der Fasern ändern.

Auch die Einstellung des Winkels, um den die Hauptachsen zueinander bzw. gegeneinander verdreht werden, kann auf die verschiedensten Arten erfolgen:

So ist es möglich, daß zur Einstellung des Winkels zwei PM-Fasern unter einem dem einzustellenden Winkel entsprechenden Winkel miteinander verspleist werden. Ferner können zur Einstellung des Winkels optische Schleifringe und/oder Wellenplatten eingesetzt werden.

Als Polarisationssplitter/combiner-Elemente können die verschiedensten Elemente eingesetzt werden, wie sie derzeit auf dem Markt erhältlich sind. Beispielsweise können die Elemente als PBS-Würfel oder als all-in-faser-Elemente ausgeführt sein.

In jedem Falle ist es jedoch bevorzugt, wenn alle Lichtwege polarisationserhaltend sind. Dies kann beispielsweise dadurch realisiert werden, daß Freistrahlwege und/oder PM-Fasern die Lichtwege bilden.

### Kurze Beschreibung der Zeichnung

Die Erfindung wird nachstehend anhand eines Ausführungsbeispiels unter Bezugnahme auf die Zeichnung näher beschrieben, in der zeigen:

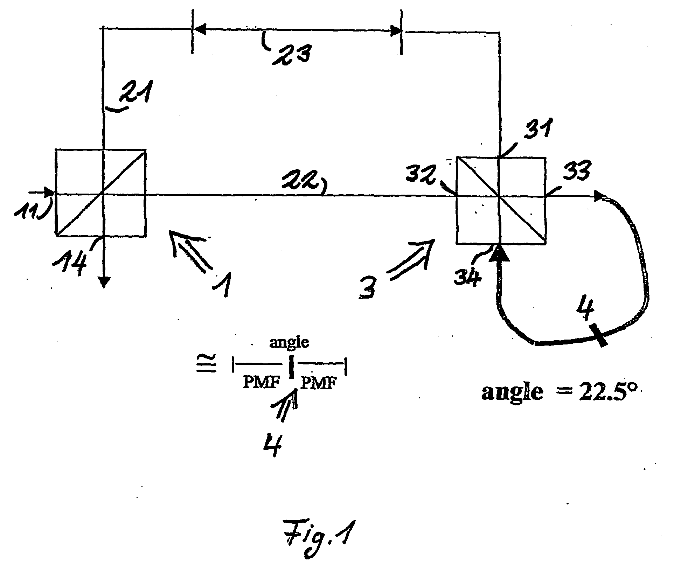

- Fig. 1: den prinzipiellen Aufbau einer erfindungsgemäßen Anordnung zur Erzeugung einer vorgebbaren Polarisations-Moden-Dispersion.

### Beschreibung eines bevorzugten Ausführungsbeispiels

Fig. 1 zeigt eine erfindungsgemäße Anordnung, die ein erstes Polarisationssplitter/combiner-Element 1, auf dessen Anschluß 11 das ankommende Lichtsignal auftrifft. Das Element 1 kann insbesondere ein Polarisationssplitter/combiner-Element ein PBS-Würfel oder ein all-in-faser-Element sein. Das Element 1 spaltet das ankommende Signal in zwei Signale mit zueinander senkrechter Polarisationsrichtung auf. In der einen Signalstrecke 21 ist eine Verzögerungseinheit 23 angeordnet, die das entsprechende Lichtsignal um einen geeigneten Wert verzögert. In der anderen Signalstrecke 22 ist kein verzögerndes Element vorgesehen. Ein zweites Polarisationssplitter/combiner-Element 3, auf dessen Anschlüsse 31 und 32 die beiden Lichtsignale auftreffen, führt das verzögerte und das nicht verzögerte Signal wieder zusammen. Das zusammengeführte Signal tritt an dem Anschluß 33 des Elements 3 aus. Insoweit ist der Aufbau bekannt und dient zur Kompensation einer Polarisations-Moden-Dispersion erster Ordnung.

Zur Erzeugung einer Polarisations-Moden-Dispersion zweiter Ordnung ist ein Element 4 vorgesehen, das mit dem aus dem Anschluß 33 austretenden Signal beaufschlagt wird, und das die Polarisations-Hauptachsen vor und hinter dem Element um einen geeigneten Winkel zueinander verdreht. Dieser Winkel kann insbesondere 22,5° sein. Das aus dem Element 4 austretende Lichtsignal, dessen Polarisations-Hauptachsen um den genannten Winkel verdreht sind, beaufschlagt den Anschluß 34 des Elements 3.

Das Element 3 teilt das an seinem Anschluß 34 anstehende Signal derart auf, daß es über die Signalstrecken 31 und 32 wieder zu dem Element 1 zurückgeführt wird.

Das Polarisationssplitter/combiner-Element 1 führt die beiden Signale zusammen, das zusammengeführte Signal tritt an dem Anschluß 14 aus dem Element 1 aus, wobei es derart umgewandelt ist, daß es eine Polarisations-Moden-Dispersion erster und zweiter Ordnung kompensiert.

Vorstehend ist die Erfindung anhand eines Ausführungsbeispiels ohne Anwendbarkeit und Ausführbarkeit beschrieben worden. Selbstverständlich sind die verschiedensten Abwandlungen möglich. So ist es möglich, daß der Winkel, um den das Element die Polarisations-Hauptachsen gegeneinander verdreht, einstellbar ist.

Zur Einstellung des Winkels können zwei PM-Fasern unter einem dem einzustellenden Winkel entsprechenden Winkel miteinander verspleist werden. Ferner können zur Einstellung des Winkels optische Schleifringe und/oder schrägstehende Wellenplatten eingesetzt werden.

Die Verzögerungsstrecke kann optisch oder elektrisch realisiert werden. Insbesondere ist es möglich, daß der Strahl in der Verzögerungsstrecke als Freistrahl geführt wird, und daß die Weglänge geändert wird. Ferner können die Fasern als Verzögerungsstrecke zur Einstellung der Verzögerung mechanischen Kräften ausgesetzt werden.

## Patentansprüche

1. Anordnung zur Erzeugung einer vorgebbaren Polarisations-Moden-Dispersion, mit
- einem ersten Polarisationssplitter/combiner-Element (1), das das ankommende Signal in zwei Signale mit zueinander orthogonaler Polarisationsrichtung aufspaltet,
- einer Verzögerungseinheit (23), die in einer der Signalstrecken (21) der beiden aufgespalteten Signale angeordnet ist,
- einem zweiten Polarisationssplitter/combiner-Element (3), das die beiden getrennten Signale wieder zusammenführt, und
- einem Element (4) das mit dem aus den zweiten Polarisationssplitter/combiner-Element (3) austretenden Signal beaufschlagt wird, und das die Polarisations-Hauptachsen um einen geeigneten Winkel verdreht,
**dadurch gekennzeichnet, daß**
zur Erzeugung einer Polarisations-Moden-Dispersion zweiter Ordnung, das aus diesem Element (4) austretende Lichtsignal in den nicht benutzte Eingangsanschluß (34) des zweiten Polarisationssplittericombiner-Elementes (3) wieder zurückgekoppelt wird und das Signal dann die Verzögerungsstrecke (23) und den ersten Polarisationssplitter/combiner-Element (1) in Gegenrichtung zum ankommenden Signal durchläuft und am vierten Tor (14) des ersten Polarisationssplitter/combiner-Elementes (1) ausgekoppelt wird.

2. Anordnung nach Anspruch 1,
**dadurch gekennzeichnet, daß** der Winkel, um den das Element die Polarisations-Hauptachsen gegeneinander verdreht, einstellbar ist.

3. Anordnung nach Anspruch 1 oder 2,
**dadurch gekennzeichnet, daß** der Winkel ca. 22,5° ist.

4. Anordnung nach einem der Ansprüche 1 bis 3,
**dadurch gekennzeichnet, daß** zur Einstellung des Winkels zwei PM-Fasern unter einem dem einzustellenden Winkel entsprechenden Winkel miteinander verspleißt werden.

5. Anordnung nach einem der Ansprüche 1 bis 3,
**dadurch gekennzeichnet, daß** zur Einstellung des Winkels optische Schleifringe und/oder schrägstehende Wellenplatten eingesetzt werden.

6. Anordnung nach einem der Ansprüche 1 bis 5,
**dadurch gekennzeichnet, daß** die Polarisationssplitter/combiner-Elemente als PBS-Würfel oder als all-in-faser-Elemente ausgeführt sind.

7. Anordnung nach einem der Ansprüche 1 bis 6;
**dadurch gekennzeichnet, daß** alle Lichtwege polarisationserhaltend sind.

8. Anordnung nach Anspruch 7,
**dadurch gekennzeichnet, daß** Freistrahlwege und/oder PM-Fasern die Lichtwege bilden.

## Claims

1. Arrangement for producing a presettable polarization mode dispersion comprising
- a first polarization splitter/combiner element (1) wherein the signal received is split into two signals that are in orthogonal polarization alignment with one another,
- a delay unit (23) positioned in one of the signal paths (21) of the two split signals,
- a second polarization splitter/combiner element (3) which re-combines the two split signals, and
- an element (4) to which the output signal of the second polarization splitter/combiner element is applied and which twists the main polarization axes by a suitable angle,
**characterized in that**
in order to generate a second-order polarization mode dispersion, the light signal emerging from said element (4) is coupled back into the unused input (34) of the second polarization splitter/combiner element (3), with the signal subsequently running through the delay path (23) and the first polarization splitter/combiner element (1) in the opposite direction of the incoming signal and coupled out of the fourth port (14) of the first polarization splitter/combiner element (1).

2. Arrangement according to claim 1,
**characterized in that** the angle by which the element twists the main polarization axes against each other is adjustable.

3. Arrangement according to claim 1 or 2,
**characterized in that** the angle is approximately 22.5 degrees.

4. Arrangement according to one of claims 1 to 3,
**characterized in that** the angle is adjusted by splicing two PM fibers together at an angle corresponding to the angle to be adjusted.

5. Arrangement according to one of claims 1 to 3,
**characterized in that** the angle is adjusted by optical slip rings and/or oblique-standing wave plates.

6. Arrangement according to one of claims 1 to 5,
**characterized in that** the polarization splitter/combiner elements are constructed as PBS cubes or as all-in-fiber elements.

7. Arrangement according to one of claims 1 to 6,
**characterized in that** all light paths are polarization-maintaining.

8. Arrangement according to claim 7,
**characterized in that** the light paths are free-beam paths and/or PM fibers.

## Revendications

1. Dispositif pour générer une dispersion prédéfinissable de modes de polarisation, comportant
- un premier élément séparateur/combineur de polarisation (1) qui sépare le signal arrivant en deux signaux de direction de polarisation orthogonale l'une par rapport à l'autre,
- une unité de retard (23) disposée dans l'un des trajets de signal (21) des deux signaux séparés,
- un deuxième élément séparateur/combineur de polarisation (3) qui réunit de nouveau les deux signaux séparés et
un élément (4) auquel est appliqué le signal sortant du deuxième élément séparateur/combineur de polarisation (3) et qui fait pivoter l'axe principal de polarisation d'un angle approprié,
**caractérisé en ce que**
pour la génération d'une dispersion de modes de polarisation de deuxième ordre, le signal lumineux sortant de cet élément (4) est réinjecté dans le raccordement d'entrée (34) non utilisé du deuxième élément séparateur/combineur de polarisation (3) et que le signal parcourt alors le trajet de retard (23) et traverse le premier élément séparateur/combineur de polarisation (1) dans la direction inverse à celle du signal arrivant et est découplé à la quatrième porte (14) du premier élément séparateur/combineur de polarisation (1).

2. Dispositif selon la revendication 1,
**caractérisé en ce que** l'angle dont l'élément fait pivoter les uns contre les autres les axes principaux de polarisation est réglable.

3. Dispositif selon la revendication 1 ou 2,
**caractérisé en ce que** la valeur de l'angle est d'environ 22,5°.

4. Dispositif selon l'une quelconque des revendications 1 à 3,
**caractérisé en ce que**, pour le réglage de l'angle, deux fibres PM sont épissées ensembles sous un angle correspondant à celui à régler.

5. Dispositif selon l'une quelconque des revendications 1 à 3,
**caractérisé en ce que**, pour le réglage de l'angle, des joints tournants optiques et/ou des plaques demi-onde figurant en biais sont utilisés.

6. Dispositif selon l'une quelconque des revendications 1 à 5,
**caractérisé en ce que** les éléments séparateurs/combineurs de polarisation sont réalisés en tant que cube PBS ou éléments « all in fiber ».

7. Dispositif selon l'une quelconque des revendications 1 à 6,
**caractérisé en ce que** tous les trajets de lumière récepteurs de polarisation.

8. Dispositif selon la revendication 7,
**caractérisé en ce que** des trajets de faisceau libre et/ou des fibres PM forment les trajets de lumière.
